# EUROPÄISCHE PATENTANMELDUNG

(11) **EP 0 598 196 A1**
(43) Veröffentlichungstag der Anmeldung: **25.05.1994**
(21) Anmeldenummer: 93114788.8
(22) Anmeldetag: 15.09.1993
(51) Int. Cl.: H02B 1/015, G09F 7/08

(54) **Einrichtung zum Kennzeichnen der Zuordnung von Geräten zu Stromkreisen**

(30) Priorität: 16.11.1992 DE 4238612
(71) Anmelder: HAGER ELECTRO GmbH, D-66131 Saarbrücken (DE)
(72) Erfinder: Chabrat, Laurent, F-67540 Ostwald (FR); Luck, Karl-Heinz, D-66386 St. Ingbert (DE)
(74) Vertreter: Bernhardt, Winfrid, Dr.-Ing.

(57) **Zusammenfassung**

Zum Kennzeichnen der Zuordnung von am Verteiler einer elektrischen Hausinstallation angebrachten Geräten, wie Leitungsschutzschaltern, zu Räumen und/oder Verbrauchern soll eine unterhalb oder oberhalb der Geräte an einer Abdeckung des Verteilers anzubringende Einrichtung dienen: Mit Symbolen versehene Platten (6) sind als anklemmbare Aufsätze einer Leiste ausgebildet, die eine mit einem abziehbaren Schutzstreifen belegte Kleberschicht aufweist.

## Beschreibung

Die Erfindung betrifft eine Einrichtung zum Kennzeichnen der Zuordnung von am Verteiler einer elektrischen Hausinstallation angebrachten Geräten zu Räumen und/oder Verbrauchern mittels vorgefertigter, unterhalb oder oberhalb der Geräte an einer Abdeckung des Verteilers anzubringender Etiketten o. dgl..

Eine solche Einrichtung ist bekannt in Form mit Symbolen versehener Aufkleber.

Ferner bekannt sind an den Leitungsschutzschaltern, die bisher die größte Zahl der in Betracht stehenden Geräte darstellen, angebrachte Fenster, unter denen beschriftete Etiketten eingeschoben werden.

Dies kennt man schließlich auch mit der Abwandlung, daß statt der individuell beschrifteten Etiketten vorgefertigte Etiketten verwendet werden, die mit Symbolen versehen sind.

Der Erfindung liegt die Aufgabe zugrunde, eine Einrichtung der eingangs genannten Art zu schaffen, die leicht und schnell zu handhaben ist und dabei im Falle des Bedarfs auch differenzierte Angaben ermöglicht.

Gemäß der Erfindung wird dieser Zweck dadurch erfüllt, daß die genannten Etiketten o. dgl. als anklemmbare Aufsätze einer Leiste ausgebildet sind, an der Vorkehrungen zum schnellen Befestigen an der Abdeckung getroffen sind.

Hier braucht nur einmal die Leiste unter einer Reihe von Leitungsschutzschaltern o.a. genau plaziert und angeklebt, mittels Schnappern oder durch Einschieben in eine Führung o.a. befestigt zu werden statt der Vielzahl der einzelnen Etiketten. Die Leiste läßt sich zudem leichter fassen. Auch die kleinen Aufsätze dann oder auch vorher anzuklemmen und nötigenfalls ein kleines Stück nach rechts oder links zu verschieben, ist eine einfache Montagearbeit.

Mit mehreren Leisten untereinander - vorzugsweise sind die Leistein als Mehrfach-Teil hergestellt mit Brechrillen zwischen den einzelnen Teilen - können demselben Leitungsschutzschalter mehrere Angaben zugeordnet werden, beispielsweise Verbraucher, Raum und Stockwerk.

Vorzugsweise besteht die Leiste aus einem flachen, mindestens zwei Hinterschneidungen aufweisenden Profil, und die, gleichfalls flachen, Aufsätze rasten mit federnden Gegenstücken dazu in den Hinterschneidungen ein.

Die flache Ausbildung entspricht der Funktion als Etikett und ist auch sonst unter verschiedenen Gesichtspunkten zweckmäßig.

Nach einer weiteren vorteilhaften Ausgestaltung der Erfindung sind die zwei Hinterschneidungen an den beiden Schmalseiten des flachen Profils ausgebildet.

Damit erhalten die Aufsätze einen besonders festen Sitz beispielsweise im Vergleich mit einer in der Mitte der Leiste verlaufenden, an ihren beiden Seiten hinterschnittenen Rille, die jedoch auch möglich wäre.

Das flache Profil mit den hinterschnittenen Kanten hat zweckmäßigerweise einen flach-omega-förmigen Querschnitt mit nach innen verbreiterten Enden, ist also hohl. Die nach innen verbreiterten Enden des Querschnitts bilden Füße, d.h. über die Länge des Profils gesehen Anlage- und Klebflächen.

Die Aufsätze weisen die federnden Gegenstükke zu den Hinterschneidungen vorzugsweise als unter einer Platte, die ein Symbol oder eine Beschriftung trägt, angeformte Hakenprofile auf.

Die Hakenprofile haben eine ihrer Länge entsprechende Festigkeit. Mit ihrer Anordnung unter der Platte sind sie völlig verdeckt, eine optisch günstige Lösung.

Gleichfalls optisch besonders befriedigend, aber auch hinsichtlich der Platzausnutzung für die Symbole oder Beschriftungen sowie für die Montage günstig ist die weitere Ausgestaltung, daß die Platten rechteckig und so lang wie eine genormte Breite der Leitungsschutzschalter und so breit wie die flachen Profile sind, derart, daß die Platten in Längsrichtung der Profile lückenlos aneinanderschließen und im Falle der Mehrfach-Teile von Profil zu Profil lückenlos aneinanderschließen.

Die Einrichtung wird damit zu einer Tafel. Die Symbole oder Beschriftungen können die volle Breite der Tafel ausnutzen und eine dementsprechende Größe haben. Das lückenlose Aneinanderschließen der Platten auf der Länge des Profils bedeutet, daß die Platten bei der Montage immer bloß auf Anschlag gesetzt zu werden brauchen.

Vorzugsweise sind die Platten dabei an ihren sichtbaren Kanten gefast, so daß sie in der Tafel einzeln hervorgehoben sind. Das ist ästhetisch befriedigender als ungewollte und unvermeidbare schmale Fugen und betont überdies die Unterscheidung zwischen verschiedenen Leisten mit ihren verschiedenen, innerhalb der Leiste gleichartigen, Inhalten.

Die Verteiler-Abdeckungen haben Ausnehmungen genormter Länge für Reihen-Anordnung der, in ihren Abmessungen gleichfalls genormten, Leitungsschutzschalter in einer bestimmten Zahl. Soweit diese Zahl nicht erreicht wird, wird die Ausnehmung durch Deckel verschlossen.

Dementsprechend soll die nach der Erfindung vorgesehene Leiste gleiche Länge wie eine solche Ausnehmung aufweisen und an nicht mit Leitungsschutzschaltern belegten Plätzen abgedeckt werden mit Aufsätzen ohne Symbol oder Beschriftung.

Ein Ausführungsbeispiel der Erfindung ist in den Zeichnungen veranschaulicht.
Fig. 1 zeigt eine Einrichtung zum Kennzeichnen der Zuordnung von Leitungsschutzschaltern in Ansicht,
Fig. 2 zeigt die Unterkonstruktion des in Fig. 1 sichtbaren Teiles der Einrichtung in Ansicht,
Fig. 3 zeigt die Unterkonstruktion in Ansicht gemäß Fig. 2 von rechts,
Fig. 4 zeigt den sichtbaren Teil in Ansicht gemäß Fig. 1 von rechts,
Fig. 5 zeigt ein Einzelteil in Ansicht gemäß Fig. 1 von unten,
Fig. 6 zeigt eine nur teilweise veränderte Einrichtung mit einem weiteren Einzelteil in isometrischer Darstellung und
Fig. 7 zeigt das genannte Einzelteil für sich in isometrischer Darstellung.

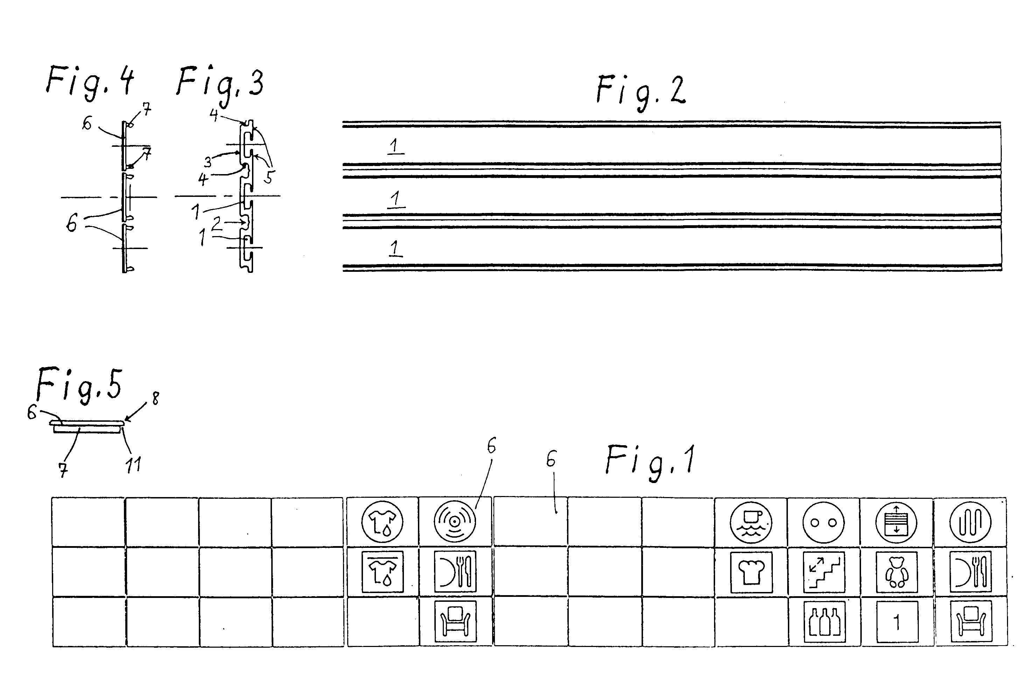

Die genannte Unterkonstruktion besteht, wie Fig. 3 am besten erkennen läßt, aus drei zusammenhängenden Profilen 1. Brechrillen 2 zwischen den Profilen 1 erlauben es, je nach Bedarf auch zwei Profile oder nur ein Profil zu verwenden.

Der Querschnitt der Profile 1 ist flach-omegaförmig mit nach innen verbreiterten Enden, anders gesehen flach-kastenförmig mit einer ebenen Oberseite 3, zwei eingewölbten Seitenwänden 4 und einer unterbrochenen und damit in zwei Anlageflächen 5 unterteilten Unterseite. Die Anlageflächen 5 sind mit einer, in der Handelsform jeweils durch einen abziehbaren Schutzstreifen abgedeckten, Kleberschicht versehen, mit der sie an einer Verteiler-Abdeckung unter den Leitungsschutzschaltern befestigt werden.

Die genannte sichtbare Schicht der Einrichtung besteht aus plattenförmigen Aufsätzen 6, die mit an ihrer Hinterseite angeformten Hakenprofilen 7 in die eingewölbten Seitenwände 4 der Profile 1 eingerastet sind. Die an der Oberseite der plattenförmigen Aufsätze liegenden Kanten sind leicht gebrochen, siehe Pfeil 8 in Fig. 5.

Die plattenförmigen Aufsätze 6 tragen aufgedruckte Symbole, die die Zuordnung des betreffenden Leitungsschutzschalters bezeichnen. In der obersten Reihe sind die Verbraucher (einschließlich Steckdosen) bezeichnet, in der mittleren die Räume und in der unteren die Stockwerke oder wiederum Räume. So bedeutet in Fig. 1 die erste Dreier-Kombination von rechts, daß der darüber befindliche Leitungsschutzschalter der Fußbodenheizung (Symbol obere Reihe) des Eßzimmers (Symbol mittlere Reihe) und des Wohnzimmers (Symbol untere Reihe) zugeteilt ist. Die zweite Kombination bezeichnet den Rolladen (oben) des Kinderzimmers (Mitte) im ersten Stock (unten), die dritte die Steckdosen auf der Treppe zum Keller und die vierte den Geschirrspüler in der Küche.

Wo sich kein Leitungsschutzschalter befindet, sind die Profile 1 von drei leeren Aufsätzen 6 bedeckt.

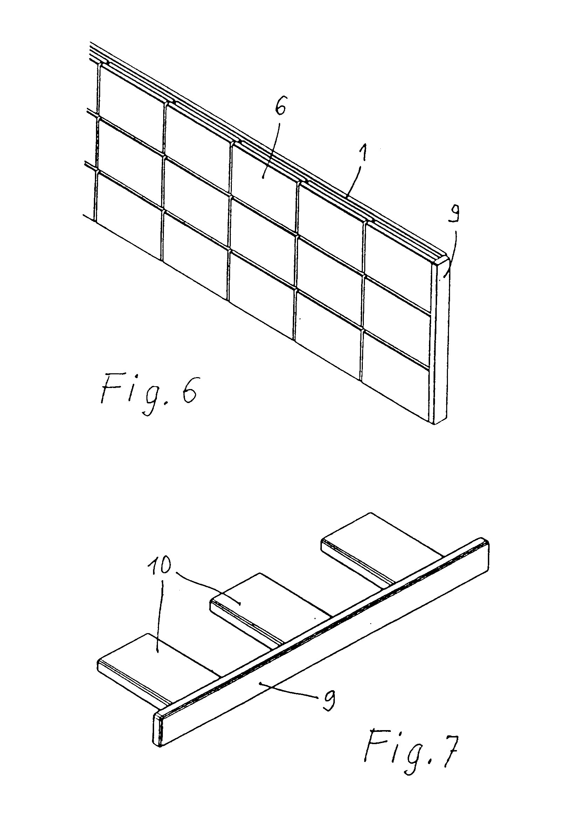

Fig. 6 und 7 lassen eine stirnseitige Abdeckung 9 der Profile 1 und der an deren Enden befindlichen Aufsätze 6 erkennen. Sie ist mit Zungen 10 in den Hohlquerschnitt der Profile 1 eingesteckt.

Etwa gleiche, aber nur die Stirnseiten der Profile 1 überdeckende Abdeckungen können in Fig. 1 unter den an den beiden Enden befindlichen Aufsätzen 6 gedacht werden, wofür, siehe Fig. 5, die Hakenprofile 7 sich nicht über die ganze Breite der plattenförmigen Aufsätze 6 erstrecken und bei 11 Platz für die Abdeckung lassen.

## Patentansprüche

1. Einrichtung zum Kennzeichnen der Zuordnung von am Verteiler einer elektrischen Hausinstallation angebrachten Geräten zu Räumen und/oder Verbrauchern mittels vorgefertigter, unterhalb oder oberhalb der Geräte an einer Abdeckung des Verteilers anzubringender Etiketten o. dgl. (6),
dadurch gekennzeichnet,
daß die genannten Etiketten o. dgl. (6) als anklemmbare Aufsätze (6) einer Leiste ausgebildet sind, an der Vorkehrungen zum schnellen Befestigen an der Abdeckung getroffen sind.

2. Einrichtung nach Anspruch 1,
dadurch gekennzeichnet,
daß die Vorkehrungen zum Befestigen aus einer mit einem abziehbaren Schutzstreifen belegten Kleberschicht bestehen.

3. Einrichtung nach Anspruch 1 oder 2,
dadurch gekennzeichnet,
daß die Leiste (1) aus einem flachen, mindestens zwei Hinterschneidungen (4) aufweisenden Profil (1) besteht und die, gleichfalls flachen, Aufsätze (6) mit federnden Gegenstükken (7) dazu in den Hinterschneidungen (4) einrasten.

4. Einrichtung nach Anspruch 3,
dadurch gekennzeichnet,
daß die zwei Hinterschneidungen (4) an den beiden Schmalseiten des flachen Profils (1) ausgebildet sind.

5. Einrichtung nach Anspruch 3 oder 4,
dadurch gekennzeichnet,
daß das Profil (1) einen flach-omega-förmigen Querschnitt mit nach innen verbreiterten Enden (5) hat.

6. Einrichtung nach einem der Ansprüche 1 bis 5, dadurch gekennzeichnet,
daß die Leiste bzw. das Profil (1) als Mehrfach-Teil hergestellt ist mit Brechrillen (2) zwischen den einzelnen Teilen (1).

7. Einrichtung nach einem der Ansprüche 3 bis 6, dadurch gekennzeichnet,
daß die Aufsätze (6) die federnden Gegenstükke (7) zu den Hinterschneidungen (4) als unter einer Platte (6), die ein Symbol oder eine Beschriftung trägt, angeformte Hakenprofile (7) aufweisen.

8. Einrichtung nach Anspruch 7,
dadurch gekennzeichnet,
daß die Platten (6) rechteckig und so lang wie eine genormte Breite von Schaltgeräten und so breit wie die flachen Profile (1) sind, derart, daß die Platten (6) in Längsrichtung der Profile (1) lückenlos aneinanderschließen und im Falle der Mehrfach-Teile von Profil (1) zu Profil (1) lückenlos aneinanderschließen.

9. Einrichtung nach Anspruch 8,
dadurch gekennzeichnet,
daß die Platten (6) an ihren sichtbaren Kanten gefast (8) sind.

10. Einrichtung nach einem der Ansprüche 1 bis 9, dadurch gekennzeichnet,
daß die Leiste (1) die gleiche genormte Länge wie eine Ausnehmung in einer Verteiler-Abdekkung für Reihen-Anordnung der Leitungsschutzschalter hat und für nicht mit Leitungsschutzschaltern belegte Plätze Aufsätze (6) ohne Symbol oder Beschriftung für die Leiste (1) vorgesehen sind.

11. Einrichtung nach einem der Ansprüche 1 bis 10,
dadurch gekennzeichnet,
daß eine stirnseitige Abdeckung (9) für die Leiste (1) vorgesehen ist, vorzugsweise ferner an der Unterseite der Aufsätze (6) Platz (11) für die Abdeckung.
